(19) Europäisches Patentamt
European Patent Office
Office européen des brevets

(11) **EP 4 621 000 A1**

(12) **EUROPEAN PATENT APPLICATION**

(43) Date of publication:
**24.09.2025 Bulletin 2025/39**

(21) Application number: **24165185.0**

(22) Date of filing: **21.03.2024**

(51) International Patent Classification (IPC):
***C08J 3/28*** (2006.01)     ***C08L 23/12*** (2006.01)

(52) Cooperative Patent Classification (CPC):
(C-Sets available)
**C08J 3/28; C08K 5/14**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH
1020 Vienna (AT)**

(72) Inventor: **REICHELT, Norbert
4021 Linz (AT)**

(74) Representative: **Maiwald GmbH
Elisenhof
Elisenstraße 3
80335 München (DE)**

(54) **HIGH MELT STRENGTH POLYPROPYLENE FOR FILM MAKING AND EXTRUSION COATING**

(57) The present disclosure relates to a specific high melt strength polypropylene comprising units derivable from propylene and at least one polyunsaturated fatty acid or an ester thereof, a polymer composition comprising such a high melt strength polypropylene, a product comprising such a high melt strength polypropylene or the polymer composition comprising the same, a process for preparing such a high melt strength polypropylene as well as its use for film making or extrusion coating.

**EP 4 621 000 A1**

**(Cont. next page)**

(52) Cooperative Patent Classification (CPC): (Cont.)

C-Sets
**C08F 210/06, C08F 236/20;**
**C08F 210/06, C08F 236/22;**
**C08F 255/02, C08F 236/20;**
**C08F 255/02, C08F 236/22;**
**C08K 5/14, C08L 23/12;**
C08F 110/06, C08F 2500/09, C08F 2500/11,
C08F 2500/12, C08F 2500/15, C08F 2500/19,
C08F 2500/26, C08F 2500/33, C08F 2500/34

**Description**

**TECHNICAL FIELD**

The present invention relates to a specific high melt strength polypropylene comprising units derivable from propylene and at least one polyunsaturated fatty acid or an ester thereof, a polymer composition comprising such a high melt strength polypropylene, a product comprising such a high melt strength polypropylene or the polymer composition comprising the same, a process for preparing such a high melt strength polypropylene as well as its use for film making or extrusion coating.

**TECHNICAL BACKGROUND**

High melt strength polypropylenes for film making or extrusion coating are known in the art. Such high melt strength polypropylenes typically require a minimum melt flow rate and a minimum melt strength to allow for a suitable processability and a suitable elongation and/or extension of the polymer. One conventional manner of making known high melt strength polypropylenes is by reactive extrusion of a polypropylene with an unsaturated coupling agent in the presence of a radical forming agent. For example, US 9,410,034 B2 relates to a high melt strength polypropylene which is made by such a reactive extrusion process and which is suitable for making film.

EP2492293 A1 relates to a polypropylene composition for extrusion coating.

US 8,142,902 B2 relates to an article comprising a substrate, wherein the substrate is extrusion coated with a composition comprising a multi-branched polypropylene.

US 9,574,116 B2 and US 9,353,296 B2 relate to a propylene polymer composition suitable for extrusion coating of paper substrates. US 6,251,995 B1 relates to polyolefin coating of substrates.

One problem of known high melt strength polypropylenes for film making and coating is inhomogeneity of the polymer. This is especially the case for high melt strength polypropylenes made by reactive extrusion using unsaturated coupling agents under radical reaction conditions. The inhomogeneity is typically caused by a fraction of high molecular weight polymer which is also referred to as gel. Due to the presence of the high molecular weight fraction (gel), it is difficult to provide a high quality film or high quality coating from the high melt strength polypropylene. One way to at least partially address the problem of the inhomogeneity of the high melt strength polypropylene may be to subject the material to a melt homogenization step, e.g., by visbreaking. Such a step is however often not desirable as it adds additional complexity to the production process and may lead to other or additional difficulties.

There is a need in the art for high melt strength polypropylenes which are suitable for film and/or coating applications in terms of processability, and particularly melt flow rate, and melt extension properties, and especially melt strength, and which at the same time provide a reduced gel level. It is further desirable that the properties of the high melt strength polypropylene, like its melt flow rate or melt homogeneity, are such that optimization by additional downstream process steps can be avoided or minimized. For example, it is desirable that the high melt strength polypropylene is of such a quality after preparation that a melt homogenization step, like a visbreaking step, is not necessarily needed before using the polymer for film and/or coating application.

One object of the present invention can be seen to at least partially overcome a drawback of a high melt strength polypropylene known in the prior art. One object of the present invention can be seen in providing a high melt strength polypropylene for film and/or coating application which has a low gel content.

**SUMMARY OF THE INVENTION**

One aspect of the present invention provides a high melt strength polypropylene comprising units derivable from

- propylene, and
- at least one polyunsaturated fatty acid or an ester thereof,

wherein the high melt strength polypropylene has:

- a melt flow rate $MFR_2$ of at least 7.0 g/10 min, determined according to ISO 1133 at 230 °C and a load of 2.16 kg, and
- a melt strength $F_{30}$ in a range of 6.0 to 17.5 cN, determined by Rheotens measurement according to ISO16790:2005.

One finding of the present invention is that the high melt strength polypropylene has a particularly low gel level in combination with an appropriate melt flow rate and melt strength for film and/or coating applications. The low gel level of the high melt strength polypropylene may advantageously be used for providing high quality film or coatings in one production step.

One aspect of the present invention provides a polymer composition comprising a high melt strength polypropylene according to an embodiment of the invention.

One aspect of the present invention relates to a product comprising a high melt strength polypropylene according to an embodiment of the invention or a polymer composition according to an embodiment of the invention.

A further aspect relates to a process for preparing a high melt strength polypropylene according to an embodiment of the invention, the process comprising the steps of:

- providing a polymer compound comprising a polypropylene material and a polyunsaturated fatty acid ester,
- irradiating the polymer compound by means of electron beam irradiation.

Specific embodiments of the invention are defined in the dependent claims.

In one embodiment, the high melt strength polypropylene has a gel number of less than $300/m^2$, determined by an optical control system (OCS) test on a film of the high melt strength polypropylene having a thickness of 50 $\mu m$.

In one embodiment, the high melt strength polypropylene has a shear thinning index ($SHI_{0.05/285}$) in a range of 12 to 40, wherein the shear thinning index ($SHI_{0.05/285}$) is defined as a ratio between the complex viscosity $\eta^*$ at a frequency of 0.05 rad/s and the complex viscosity $\eta^*$ at a frequency of 285 rad/s, determined by oscillatory shear testing at a temperature of 200°C.

In one embodiment, the high melt strength polypropylene has melt flow rate $MFR_2$ is in a range of 7.0 to 30.0 g/10 min, determined according to ISO 1133 at 230 °C and a load of 2.16 kg.

In one embodiment, the high melt strength polypropylene has an additional $F_{30}$ melt strength (AMS) of at least 5.0 cN, determined by Rheotens measurement according to ISO 16790:2005, compared to the $F_{30}$ melt strength (LMS) of a linear polypropylene having the same melt flow rate $MFR_2$, determined at 230 °C and a load of 2.16 kg according to ISO 1133, as the high melt strength polypropylene, wherein the additional $F_{30}$ melt strength (AMS) is determined according to equation (I)

$$AMS = MS(HMS\text{-}PP) - LMS \qquad (I),$$

wherein:

AMS is the additional $F_{30}$ melt strength (AMS) determined by Rheotens measurement according to ISO 16790:2005 in [cN], compared to the $F_{30}$ melt strength (LMS) of a linear polypropylene having the same melt flow rate $MFR_2$ (230 °C, 2.16 kg), determined according to ISO 1133, as the high melt strength polypropylene,

MS(HMS-PP) is the $F_{30}$ melt strength of the high melt strength polypropylene determined by Rheotens measurement according to ISO 16790:2005 in [cN],

LMS is the $F_{30}$ melt strength (LMS) in [cN] of a linear polypropylene having the same melt flow rate $MFR_2$ (230 °C, 2.16 kg) determined according to ISO 1133 as the high melt strength polypropylene, and wherein the $F_{30}$ melt strength (LMS) is determined according to equation (II)

$$LMS = 17.35 * MFR^{-0.994} \qquad (II),$$

wherein MFR is the melt flow rate $MFR_2$, determined at 230 °C at a load of 2.16 kg according to ISO 1133, of the high melt strength polypropylene.

In one embodiment, the at least one polyunsaturated fatty acid is $\alpha$-linolenic acid and/or linoleic acid.

In one embodiment, the high melt strength polypropylene is obtainable by electron beam irradiating a compound comprising a polypropylene material and a polyunsaturated fatty acid ester, and optionally wherein the polypropylene material is a visbroken polypropylene material.

In one embodiment, the product is a film or a coating.

In one embodiment of the process, the polymer compound has a melt flow rate $MFR_2$ in a range of 2.0 to 6.5 g/10 min, determined according to ISO 1133 at 230 °C and a load of 2.16 kg.

In one embodiment of the process, the polymer compound comprises, based on the total weight of the polymer compound,

95.0 to 99.98 wt.% of the polypropylene material,
0.02 to 1.0 wt.% of the polyunsaturated fatty acid ester, and
optionally 0.01 to 4.0 wt.% of one or more additives.

In one embodiment of the process, the polymer compound is obtained by melt blending a polypropylene starting material, a peroxide visbreaking agent, and the polyunsaturated fatty acid ester.

**DEFINITIONS**

The term "polypropylene" as used herein is to be understood in a broad sense in that it encompasses propylene homopolymers, copolymers of propylene, and heterophasic propylene copolymers (HECOs).

The term "propylene homopolymer" relates to a polypropylene that consists substantially, i.e. of at least 99.5 wt.%, preferably of at least 99.8 wt.%, like of at least 99.9 wt.%, of propylene units.

The term "copolymer of propylene" as used herein refers to a copolymer of propylene with one or more $\alpha$-olefin, for example, one or more $\alpha$-olefin chosen from the group of $\alpha$-olefins having 2 or 4 to 10 C-atoms, like ethylene. The amount of $\alpha$-olefin, like ethylene, is typically less than 10 wt. % (e.g., in a range of 1 to less than 10 wt.%), based on the total weight of the propylene copolymer.

A "heterophasic propylene copolymer (HECO)" in the meaning of the present disclosure is a propylene polymer composition comprising: i) a matrix (M) being a polymer of propylene, and ii) an elastomer (E) being a copolymer comprising units derived from propylene and ethylene and/or $C_4$ to Ca $\alpha$-olefin. In that context, the term "heterophasic" indicates that the elastomer is (finely) dispersed in the matrix. In other words, the elastomer forms inclusions in the matrix. Thus, the matrix contains (finely) dispersed inclusions being not part of the matrix and said inclusions contain the elastomer. The term "inclusion" can be understood in that the matrix and the inclusion form different phases within the propylene copolymer (HECO), said inclusions are for instance visible by high resolution microscopy, like electron microscopy or scanning force microscopy.

The term "polyunsaturated fatty acid" as used herein refers to a fatty acid comprising at least two C-C double bonds. Polyunsaturated fatty acids are known to the person of skill. For example, polyunsaturated fatty acids may be, but are not limited to, linoleic acid, eicosadienoic acid, docosadienoic acid, $\alpha$-linolenic acid, $\gamma$-linolenic acid, pinolenic acid, eleostearic acid, mead acid, dihomo-$\gamma$-linolenic acid, eicosatrienoic acid, stearidonic acid, arachidonic acid, eicosatetraenoic acid, and adrenic acid. In one embodiment, the at least one polyunsaturated acid is selected from the group consisting of linoleic acid, eicosadienoic acid, docosadienoic acid, $\alpha$-linolenic acid, $\gamma$-linolenic acid, pinolenic acid, eleostearic acid, dihomo-$\gamma$-linolenic acid, eicosatrienoic acid, stearidonic acid, arachidonic acid, eicosatetraenoic acid, and adrenic acid.

When it is referred herein to "the polymer compound" (also abbreviated as "PC"), the polymer compound is meant which is provided for being subjected to electron beam irradiation (unless explicitly stated otherwise). After electron beam irradiation, the polymer compound is referred herein to as "irradiated polymer compound". When it is referred herein to "the polypropylene material", the polypropylene material being present in the polymer compound before irradiation is meant (unless explicitly stated otherwise). When it is referred herein to "the polypropylene starting material", the polypropylene material is meant which is used to prepare the polymer compound (unless explicitly stated otherwise).

The term "recycled polyolefin" relates to polyolefin which is derived from recycled waste, like post-consumer waste. "Post consumer waste" is defined in, for example, ISO 15270 (ISO15270:2008-06-15). Recycled waste, like post-consumer waste, can typically be identified by the presence of low amounts of compounds usually not found in new (virgin) polyolefin materials such as polystyrenes, polyamides (e.g., polyamide-6), polyesters, paper, fillers (e.g., in terms of ash content), limonene, aldehydes, ketones, fatty acids, metals, oxidative degradation products of polyolefin, and/or decomposition products of stabilizers.

Where the term "comprising" is used herein, it does not exclude that further non-specified elements are present. Where the term "essentially consisting of" is used herein, it is does not exclude that further non-specified elements are present that are not materially affecting the essential characteristics of the defined subject-matter. For the purposes of the present invention, the terms "essentially consisting of" and "consisting of" are considered to be specific embodiments of the term "comprising of". Whenever the terms "including" or "having" are used, these terms are meant to be equivalent to "comprising" as defined above.

In the following, the invention is described in more detail.

**DETAILED DESCRIPTION**

**I. The high melt strength polypropylene**

One aspect of the present invention provides a high melt strength polypropylene comprising units derivable from

- propylene, and
- at least one polyunsaturated fatty acid or an ester thereof,

wherein the high melt strength polypropylene has:

- a melt flow rate $MFR_2$ of at least 7.0 g/10 min, determined according to ISO 1133 at 230 °C and a load of 2.16 kg, and
- a melt strength $F_{30}$ in a range of 6.0 to 17.5 cN, determined by Rheotens measurement according to ISO16790:2005.

The high melt strength polypropylene preferably has a low gel content. The high melt strength polypropylene may have a gel number of less than $300/m^2$, like less than $200/m^2$ or less than $100/m^2$. The high melt strength polypropylene may have a gel index of less than 150, like less than 100 or less 50. The gel number and/or the gel index is/are determined by an optical control system (OCS) test on a film (cast film) of the high melt strength polypropylene having a thickness of 50 $\mu$m. A suitable optical control system (OCS) test is described herein in the section "Methods".

The high melt strength polypropylene comprises units derivable from propylene. This can be understood in that propylene is one structural building block of the high melt strength polypropylene. The units derivable from propylene are part of a polypropylene, like a propylene homopolymer, a copolymer of propylene, or a heterophasic propylene copolymer (HECO). Thus, the high melt strength polypropylene comprises or is based on a polypropylene, like a propylene homopolymer, a copolymer of propylene, or a heterophasic propylene copolymer (HECO). It is also possible that the high melt strength polypropylene comprises or is based on a blend of two or more polypropylenes selected from the group consisting of propylene homopolymers, a heterophasic propylene copolymers (HECOs), and copolymers of propylene.

Preferably, the units derivable from propylene are part of a propylene homopolymer. In other words, the high melt strength polypropylene preferably comprises or is based on a propylene homopolymer.

The high melt strength polypropylene may be predominantly composed of polypropylene. The high melt strength polypropylene may comprise polypropylene (e.g., propylene homopolymer) in an amount of at least 95.0 wt.% or at least 97.0 wt.%, based on the total weight of the high melt strength polypropylene.

The high melt strength polypropylene further comprises units derivable from at least one polyunsaturated fatty acid or an ester thereof. This can be understood in that the at least one polyunsaturated fatty acid or an ester thereof is another structural building block for the high melt strength polypropylene.

The at least one polyunsaturated fatty acid may be, but is not limited to, at least one polyunsaturated fatty acid having two or three C-C double bonds. Preferably, the at least one polyunsaturated fatty acid is $\alpha$-linolenic acid and/or linoleic acid.

The ester of the at least one polyunsaturated fatty acid may be, but is not limited to, a glycerol ester of the at least one polyunsaturated fatty acid. The glycerol ester may be, but is not limited to, a triglyceride being a glycerol ester with three fatty acids of which at least one (e.g., one, two or three) is a polyunsaturated fatty acid (e.g., a polyunsaturated fatty acid having two or three C-C double bonds, preferably like $\alpha$-linolenic acid and/or linoleic acid). For example, the triglyceride may be a glycerol ester of three fatty acids of which at least one (e.g., one, two or three) is a polyunsaturated fatty acid selected from $\alpha$-linolenic acid and linoleic acid. In case the triglyceride is not a glycerol ester of three polyunsaturated fatty acids, it typically contains at least one monounsaturated fatty acid such as oleic acid or at least one saturated fatty acid such as palmitic acid or stearic acid.

The at least one polyunsaturated fatty acid or ester thereof (typically the ester of the at least one polyunsaturated fatty acid) may be derived from a vegetable oil. Suitable vegetable oils are, but are not limited to, linseed oil, sunflower oil, walnut oil, or any mixture thereof. Preferably, the at least one polyunsaturated fatty acid or ester thereof (typically the ester of the at least one polyunsaturated fatty acid) is derived from linseed oil. Linseed oil contains a high content of $\alpha$-linolenic acid and/or linoleic acid or triglycerides comprising the same.

For example, the high melt strength polypropylene may comprise units derivable from the at least one polyunsaturated fatty acid or an ester thereof in an amount in a range of 0.02 to 1.5 wt.%, preferably in a range of 0.02 to 1.0 wt.%, like in a range of 0.02 to 0.5 wt.%, based on the total weight of the high melt strength polypropylene. In one embodiment, the high melt strength polypropylene comprises units derivable from the at least one polyunsaturated fatty acid or an ester thereof in an amount in a range of 0.02 to 0.3 wt.%, based on the total weight of the high melt strength polypropylene.

The units derivable from the at least one polyunsaturated fatty acid or an ester thereof may be part of branches or branch-like structures which are connected to a polypropylene being part of the high melt strength polypropylene. The presence of units derivable from $\alpha$-linolenic acid and/or one or more other polyunsaturated fatty acid or ester thereof within the high melt strength polypropylene (e.g., as part of branches or branch-like structures) can be detected by means of $^1$H NMR spectroscopy. As described herein in the section "Methods", a signal at 5.55 to 5.27 ppm can typically be assigned to units derivable from polyunsaturated fatty acids such as $\alpha$-linolenic acid (LSO) and the intensity x of said signal after irradiation of a (linear) polypropylene in the presence of at least one polyunsaturated fatty acid or ester thereof increases with the amount of said fatty acid being added to the (linear) polypropylene.

The branches or branch-like structures may be the result of the preparation process of the high melt strength polypropylene, and especially of electron beam irradiating a polymer compound comprising a polypropylene material and a polyunsaturated fatty acid ester. Thus, the high melt strength polypropylene is obtainable or may be obtained by electron beam irradiating a polymer compound comprising a polypropylene material and a polyunsaturated fatty acid ester. The polyunsaturated fatty acid ester may be present in the polymer compound as part of a vegetable oil as described herein (e.g., linseed oil). The polypropylene material is preferably a visbroken polypropylene material (although this is not a requirement). The high melt strength polypropylene is obtainable or may be obtained by a process according to an embodiment of the present invention. As regards specific embodiments and preferred embodiments of the process, it is referred to the description of the process in other parts of the present disclosure.

The high melt strength polypropylene may have a gpc BR index, determined according to GPC, between 0.3 and 1.0, preferably between 0.5 and 0.8. The gpcBR index is typically calculated from the absolute molar mass (determined by light scattering (LS)) and intrinsic viscosity (determined by online viscometer) together with the respective conventional calibration averages. A detailed description of a method for measuring the gpc BR index is described herein below in the section "Methods". A gpc BR index larger than 0.1 typically indicates that a polymer is a branched polymer.

Thus, the high melt strength polypropylene is typically branched and, as such, differs from a linear polypropylene in that the polypropylene backbone covers side chains whereas a non-branched polypropylene, i.e. a linear polypropylene, does not cover side chains. The side chains have significant impact on the rheology of the polypropylene. Accordingly, linear polypropylenes and high melt strength polypropylenes can be clearly distinguished by their flow behavior under stress.

The high melt strength polypropylene has a melt strength $F_{30}$ in a range of 6.0 to 17.5 cN, like in a range of 6.0 to 15.0 cN, determined by Rheotens measurement according to ISO16790:2005. Additionally, the high melt strength polypropylene may have a melt extensibility $V_{30}$ of at least 230 mm/s, and preferably of at least 240 mm/s, like in a range of 240 to 320 mm/s or in a range of 240 to 300 mm/s, determined by Rheotens measurement according to ISO16790:2005. In a typical method for measuring $F_{30}$ melt strength and $V_{30}$ melt extensibility as described herein, a pressure at an extruder exit of a (Rheotens) apparatus may be set to 30 bars, a gear pump may be pre-adjusted to a strand extrusion rate of 5 mm/s, and a melt temperature may be set to 200°C. A spinline length between die and (Rheotens) wheels may be 100 mm. A more detailed description of a suitable measurement method is described herein below in the section "Methods".

The high melt strength polypropylene may have a shear thinning index ($SHI_{0.05/285}$) in a range of 12 to 40, like in a range of 14 to 37 or in a range of 16 to 35. The shear thinning index ($SHI_{0.05/285}$) is defined herein as a ratio between the complex viscosity $\eta^*$ at a frequency of 0,05 rad/s and the complex viscosity $\eta^*$ at a frequency of 285 rad/s as determined by oscillatory shear testing at a temperature of 200°C. The oscillatory shear testing may be performed on a stress controlled rotational rheometer, equipped with a parallel plate geometry, using compression moulded, and setting a strain within the linear viscoelastic regime. The oscillatory shear tests may be carried out applying a frequency range between 0.01 and 300 rad/s and setting a gap of 0.5 mm. A more detailed description of a suitable measurement method is described herein below in the section "Methods".

The high melt strength polypropylene may have a specific additional F30 melt strength (AMS). The additional $F_{30}$ melt strength (AMS) can be used as a melt flow rate normalized melt strength which can allow comparison between high melt strength (branched) polypropylene products having different melt flow rates.

The additional $F_{30}$ melt strength (AMS) is determined according to equation (I)

$$AMS = MS(HMS\text{-}PP) - LMS \qquad (I),$$

wherein:

AMS is the additional $F_{30}$ melt strength (AMS) determined by Rheotens measurement according to ISO 16790:2005 in [cN], compared to the $F_{30}$ melt strength (LMS) of a linear polypropylene having the same melt flow rate $MFR_2$ (230 °C, 2.16 kg), determined according to ISO 1133, as the high melt strength polypropylene,

MS(HMS-PP) is the $F_{30}$ melt strength of the high melt strength polypropylene determined by Rheotens measurement according to ISO 16790:2005 in [cN],

LMS is the $F_{30}$ melt strength (LMS) in [cN] of a linear polypropylene having the same melt flow rate $MFR_2$ (230 °C, 2.16 kg), determined according to ISO 1133 as the high melt strength polypropylene, and wherein the $F_{30}$ melt strength (LMS) is determined according to equation (II)

$$LMS = 17.35 * MFR^{-0.994} \qquad (II),$$

wherein MFR is the melt flow rate $MFR_2$, determined at 230 °C at a load of 2.16 kg according to ISO 1133, of the high melt strength polypropylene.

In the context of the additional $F_{30}$ melt strength (AMS) as described herein, the expression "a linear polypropylene having the same melt flow rate $MFR_2$ (230 °C, 2.16 kg), determined according to ISO 1133 as the high melt strength polypropylene" can be interpreted as a linear polypropylene having a melt flow rate $MFR_2$ (230 °C, 2.16 kg), determined according to ISO 1133, which differs from a melt flow rate $MFR_2$ (230 °C, 2.16 kg), determined according to ISO 1133, of the high melt strength polypropylene by a maximum tolerance of 10%.

The high melt strength polypropylene may have an additional $F_{30}$ melt strength (AMS), determined by Rheotens measurement according to ISO 16790:2005, compared to the $F_{30}$ melt strength (LMS) of a linear polypropylene having the same melt flow rate $MFR_2$, determined at 230 °C and a load of 2.16 kg according to ISO 1133, as the high melt strength polypropylene, of at least 5.0 cN, like at least 6.5 cN.

An upper limit of the additional $F_{30}$ melt strength (AMS), determined by Rheotens measurement according to ISO 16790:2005, compared to the $F_{30}$ melt strength (LMS) of a linear polypropylene having the same melt flow rate $MFR_2$, determined at 230 °C and a load of 2.16 kg according to ISO 1133, as the high melt strength polypropylene, may be 15 cN, 17.5 cN or 20 cN.

Thus, the high melt strength polypropylene may have an additional $F_{30}$ melt strength (AMS), determined by Rheotens measurement according to ISO 16790:2005, compared to the $F_{30}$ melt strength (LMS) of a linear polypropylene having the same melt flow rate $MFR_2$, determined at 230 °C and a load of 2.16 kg according to ISO 1133, as the high melt strength polypropylene, in a range of 5.0 to 20 cN, like in a range of 6.5 to 17.5 cN or in a range of 6.5 to 15 cN.

The high melt strength polypropylene has a melt flow rate $MFR_2$ of at least 7.0 g/10 min, determined according to ISO 1133 at 230 °C and a load of 2.16 kg. Preferably, the melt flow rate $MFR_2$ is in a range of 7.0 to 30.0 g/10 min, more preferably in a range of 7.0 to 25.0 g/10 min, like in a range of 8.0 to 23.0 g/10 min, determined according to ISO 1133 at 230 °C and a load of 2.16 kg.

In one preferred embodiment, the melt flow rate $MFR_2$ is in a range of 7.0 to 25.0 g/10 min, like in a range of 8.0 to 23.0 g/10 min, determined according to ISO 1133 at 230 °C and a load of 2.16 kg, and the melt strength $F_{30}$ is in a range of 6.0 to 17.5 cN, like in a range of 6.0 to 15.0 cN, determined by Rheotens measurement according to ISO16790:2005.

In one more specific embodiment, the melt flow rate $MFR_2$ is in a range of 7.0 to 15.0 g/10 min, like in a range of 7.0 to 12.5 g/10 min, determined according to ISO 1133 at 230 °C and a load of 2.16 kg, and the melt strength $F_{30}$ is in a range of 7.0 to 15.0 cN, determined by Rheotens measurement according to ISO16790:2005.

In one more specific embodiment, the melt flow rate $MFR_2$ is in a range of 15.0 to 27.5 g/10 min, like in a range of 17.5 to 25.0 g/10 min, determined according to ISO 1133 at 230 °C and a load of 2.16 kg, and the melt strength F30 is in a range of 7.0 to 15.0 cN, determined by Rheotens measurement according to ISO16790:2005.

The high melt strength polypropylene may have a crystallization temperature Tc, determined according to DSC, of below 125 °C, like in a range of 115 to below 125°C, and preferably of below 122 °C, like in a range of 115 to below 122°C. Additionally or alternatively, the high melt strength polypropylene (HMS-PP) may have a melting temperature Tm, determined according to DSC, of at least 155 °C, like in the range of 155 to 167 °C, in a range of 157 to 162 °C or in a range of 157 to 160°C.

The high melt strength polypropylene may further comprise one or more additives, like two, three or more additives. Suitable additives may be, but are not limited to, nucleating agents and clarifiers, stabilizers, release agents, fillers, peroxides, plasticizers, anti-oxidants, lubricants, antistatics, Vitamin E, scratch resistance agents, high performance fillers, pigments and/or colorants, impact modifiers, flame retardants, blowing agents, acid scavengers, recycling additives, coupling agents, anti-microbials, anti-fogging additives, slip agents, anti-blocking additives, polymer processing aids and the like. Such additives are known to the person of skill and are described, for example, in "Plastic Additives Handbook", 6th edition 2009 of Hans Zweifel (pages 1141 to 1190).

Additives are often provided in form of an additive masterbatch, i.e., a concentrated from of additives in a carrier material, in particular a polymeric carrier material (e.g., a polypropylene carrier material, like a propylene homopolymer carrier material). Thus, when one or more additives are introduced into the high melt strength polypropylene at some stage of its production process in form of an additive masterbatch, it may be that the high melt strength polypropylene contains a polymeric carrier material which is derived from an additive masterbatch. For the present disclosure, the term "additives" also encompasses said polymeric carrier materials.

The high melt strength polypropylene may comprise one or more additives, e.g., selected from the group as defined above, in an amount in a range of 0.02 to 5.0 wt.%, like in a range of 0.05 to 4.0 wt.% or in a range of 0.1 to 4.0 wt.%, based on the total weight of the high melt strength polypropylene.

For example, the high melt strength polypropylene may comprise a release agent (e.g., a stearate-based release agent, like calcium stearate) in an amount of 0.02 to 0.5 wt.%, based on the total weight of the high melt strength polypropylene. Additionally or alternatively, the high melt strength polypropylene may comprise one or more antioxidants (e.g., selected from phosphite ester-based antioxidants and phenol-based antioxidants) in an amount of 0.02 to 1.0 wt.%, based on the total weight of the high melt strength polypropylene.

The high melt strength polypropylene typically does not comprise significant amounts of one or more additional polymers which are different to the high melt strength polypropylene. In one embodiment, the high melt strength polypropylene does not comprise additional polymers (e.g., in form of blending partners) in an amount exceeding 5.0 wt.%, based on the weight of the high melt strength polypropylene.

In one embodiment, the high melt strength polypropylene comprises (essentially consists of or consists of), based on the total weight of the high melt strength polypropylene,

from 93.5 to 99.96 wt.%, like from 95.0 to 99.93 wt.% or from 95.5 to 99.88 wt.%, of polypropylene (e.g., propylene homopolymer),
from 0.02 to 1.5 wt.%, like from 0.02 to 1.0 wt.% or from 0.02 to 0.5 wt.% (e.g., 0.02 to 0.3 wt.%), of units derivable from at least one polyunsaturated fatty acid or ester thereof,
from 0.02 to 5.0 wt.%, like from 0.05 to 4.0 wt.% or from 0.1 to 4.0 wt.%, of one or more additives.

In one embodiment, the high melt strength polypropylene comprises (essentially consists of or consists of), based on the total weight of the high melt strength polypropylene,

from 95.7 to 99.88 wt.% of polypropylene (e.g., propylene homopolymer),
from 0.02 to 0.3 wt.% of units derivable from at least one polyunsaturated fatty acid or ester thereof,
from 0.1 to 4.0 wt.% of one or more additives.

The weight amounts may be selected to sum up to 99.8 wt.% or 100 wt.%, i.e., it may be that other components are not present (with the exception of unavoidable trace impurities which may optionally be present) or are not present in an amount of more than 0.2 wt.%, based on the total weight of the high melt strength polypropylene.

The high melt strength polypropylene according to the invention is preferably useful for preparing a film or a coating. In one embodiment, the high melt strength polypropylene is suitable for coating a substrate (e.g., a paper-based substrate, like a Kraft paper) at a coating speed of above 300 m/min. Devices, like extrusion coating lines, which can achieve such coating speeds, e.g., for paper-based substrates, are known and commercially available.

## II. The polymer composition

The present invention further relates to a polymer composition comprising the high melt strength polypropylene according to an embodiment of the invention and one or more additional polymers.

The one or more additional polymers is/are different to the high melt strength polypropylene. The one or more additional polymers may be used as a blending partner to modify the properties of the high melt strength polypropylene. For example, the one or more additional polymers may be added to improve an adhesion to a substrate to be coated. In that regard, suitable additional polymers may be, but are not limited to, polar or apolar adhesion promoters. For example, the one or more additional polymer may be a carboxylic acid anhydride-grafted polypropylene, like a maleic anhydride-grafted polypropylene or a copolymer of propylene with butene and/or ethylene.

The polymer composition may comprise up to 40 wt.% of the one or more additional polymers. The polymer composition may comprise the high melt strength polypropylene in an amount of 60 to 99 wt.%, like from 70 to 98 wt.% or 80 to 95 wt.% and the one or more additional polymer in an amount of 1 to 40 wt.%, like from 2 to 30 wt.% or from 5 to 20 wt.%, based on the total weight of the polymer composition.

The one or more additional polymers are preferably one or more polyolefins, and more preferably one or more linear polyolefins, like one or more linear polypropylenes.

As such, the one or more polymers, preferably the one or more polyolefins, may have a gpc BR, determined according to GPC, of less than 0.1. The one or more polymers may be or may contain a recycled polyolefin blend. The recycled polyolefin blend may be derived from post consumer waste.

The polymer composition may be a dry blend. For example, the polymer composition may be a blend of pellets of the high melt strength polypropylene and pellets of the one or more polymers. In case of more than one additional polymers, the polymers may be present in combination as one type of pellets or each one of the more than one polymers may be present separately in form of pellets.

Alternatively, the polymer composition may be a melt-blended polymer composition. The polymer composition may be obtainable by melt blending the high melt strength polypropylene with one or more polymers, preferably one or more polyolefins, and more preferably one or more linear polyolefins, like one or more linear polypropylenes. Melt blending processes and polymer extruders for carrying out such processes are known to the skilled person.

## III. The product

One aspect of the present invention relates to a product comprising a high melt strength polypropylene according to an embodiment of the invention or a polymer composition according to an embodiment of the invention.

The product may comprise the high melt strength polypropylene according to an embodiment of the invention.

The product may comprise the high melt strength polypropylene in an amount of at least 95 wt.%, like at least 98 wt.% or at least 99 wt.%, based on the total weight of the product. The product may essentially be composed or may be composed of the high melt strength polypropylene as described herein.

The product may comprise the polymer composition according to an embodiment of the invention. The product may comprise the polymer composition in an amount of at least 95 wt.%, like at least 98 wt.% or at least 99 wt.%, based on the total weight of the product. The product may essentially be composed or may be composed of the polymer composition as described herein..

The product may be, but is not necessarily limited to, a film or a coating. The film may be, but is not limited to, a blown film or a cast film. The film may have a thickness in a range of 20 to 500 $\mu$m, like in a range of 40 to 300 $\mu$m. The coating is typically attached to a substrate to form a coated article. The substrate may be, but is not limited to, a paper-based substrate, like a Kraft paper. Thus, the coated article may be a coated paper-based article.

The product may be used as a packaging material, like a packaging material for food or beverages. Other applications of the product are also possible.

In another aspect, the present invention provides a use of a high melt strength polypropylene according to an embodiment of the invention or a polymer composition comprising the same for making a film or a coating.

**IV. The process for preparing the high melt strength polypropylene**

A further aspect of the present invention relates to a process for preparing a high melt strength polypropylene according to an embodiment of the invention. The process comprises the steps of:

- providing a polymer compound comprising a polypropylene material and a polyunsaturated fatty acid ester,
- irradiating the polymer compound by means of electron beam irradiation.

**1. Provision of the polymer compound**

The process comprises a step of providing a polymer compound comprising a polypropylene material and a polyunsaturated fatty acid ester.

The polymer compound preferably has a MFR in a range of 2.0 to 6.5 g/10 min, more preferably in the range of 2.5 to 6.0 g/10 min, like in a range of 3.0 to 5.5 g/10 min, determined according to ISO 1133 at 230 °C and a load of 2.16 kg.

The polymer compound comprises a polypropylene material. The polypropylene material may have a melt flow rate $MFR_2$ in a range of 2.0 to 6.5 g/10 min, and preferably in a range of 2.5 to 6.0 g/10 min, like in a range of 3.0 to 5.5 g/10 min, determined according to ISO 1133 at 230 °C and a load of 2.16 kg. The polypropylene material may be a propylene homopolymer, a heterophasic propylene copolymer (HECO), or a copolymer of propylene. The polypropylene material may also be a blend of two or more polypropylene materials selected from the group consisting of propylene homopolymers, a heterophasic propylene copolymers (HECOs), and copolymers of propylene.

Preferably, the polypropylene material is a propylene homopolymer, e.g., a linear propylene homopolymer.

The polypropylene material may be a non-visbroken or visbroken polypropylene. In one embodiment, the polypropylene material is a visbroken polypropylene, and particularly a visbroken propylene homopolymer. The visbroken polypropylene (e.g., the visbroken propylene homopolymer) may have a comparatively narrow molecular weight distribution which is characteristic for a visbroken polypropylene. The visbroken polypropylene (e.g., the visbroken propylene homopolymer) may have a polydispersity (i.e., PI = Mw/Mz) of less than 10, determined by GPC measurement.

The polymer compound comprises a polyunsaturated fatty acid ester. The polyunsaturated fatty acid ester may be, but is not limited to, a glycerol ester of at least one polyunsaturated fatty acid. Preferably, the at least one polyunsaturated fatty acid is $\alpha$-linolenic acid and/or linoleic acid. The glycerol ester may be, but is not limited to, a triglyceride being a glycerol ester with three fatty acids of which at least one (e.g., one, two or three) is a polyunsaturated fatty acid. For example, the triglyceride may be a glycerol ester of three fatty acids of which at least one (e.g., one, two or three) is a polyunsaturated fatty acid selected from $\alpha$-linolenic acid and linoleic acid. In case the triglyceride is not a glycerol ester of three polyunsaturated fatty acids, it typically contains at least one monounsaturated fatty acid such as oleic acid or at least one saturated fatty acid such as palmitic acid or stearic acid.

The polyunsaturated fatty acid ester may be derived from a vegetable oil. Suitable vegetable oils are, but are not limited to, linseed oil, sunflower oil, walnut oil, or any mixture thereof. Preferably, polyunsaturated fatty acid ester is derived from linseed oil. The polymer compound may comprise a vegetable oil (e.g., linseed oil) which contains the polyunsaturated fatty acid ester. In other words, the polyunsaturated fatty acid ester may be present in the polymer compound as part of a vegetable oil (e.g., linseed oil).

The polymer compound is obtainable by different process routes. In one embodiment (also referred to herein as "process route A"), the polymer compound is obtainable, and particularly is obtained, by melt blending a polypropylene starting material A, a peroxide visbreaking agent, and the polyunsaturated fatty acid ester (e.g., as part of a vegetable oil).

The melt blending may be carried out by conventional melt extrusion.

Said polypropylene starting material A may a melt flow rate $MFR_2$ of equal to or less than 2.0 g/10 min, like in a range of 0.5 to 2.0 g/10 min or in a range of 0.6 to 1.5 g/10 min, determined according to ISO 1133 at 230 °C and a load of 2.16 kg. Preferably, the polypropylene starting material A is a propylene homopolymer, and more preferably a linear propylene homopolymer.

Peroxide visbreaking agents are known in the art. Peroxide visbreaking agents are useful for controlling the rheology of polyolefins, like polypropylenes, by a controlled degradation to give a product which typically has a lower molecular weight (higher MFR) and a narrower molecular weight distribution. Peroxide visbreaking agents typically have a decomposition temperature in the range of 180 to 250 °C. Typical peroxide visbreaking agents are, for example, 2,5-dimethyl-2,5-bis(tert-butyl-peroxy)hexane (DHBP) (for instance sold under the tradenames Luperox 101 and Trigonox 101), 2,5- dimethyl-2,5-bis(tert-butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert-butyl-peroxide (DTBP) (for instance sold under the tradenames Trigonox B and Luperox Di), tert-butyl-cumyl-peroxide (BCUP) (for instance sold under the tradenames Trigonox T and Luperox 801) and bis (tertbutylperoxy- isopropyl)benzene (DIPP) (for instance sold under the tradenames Perkadox 14S and Luperox DC). In one embodiment, the peroxide visbreaking agent is 2,5-dimethyl-2,5-di(tert.butylperoxy)hexane.

The peroxide visbreaking agent may be part of a peroxide visbreaking masterbatch. The peroxide visbreaking agent may be contained in the masterbatch composition in a range of from 1 to 10 wt.%, like from 1 to 5 wt.%, based on the total weight of the masterbatch. The remaining weight amount of the masterbatch is typically a polymer carrier material (e.g., a polypropylene carrier material). In one embodiment, the peroxide visbreaking agent (e.g., 2,5-dimethyl-2,5-di(tert.butylperoxy)hexane) is provided in form of a masterbatch based on a polypropylene carrier material, wherein the peroxide visbreaking agent (e.g., 2,5-dimethyl-2,5-di(tert.butylperoxy)hexane) is present in the masterbatch in an amount from 1 to 5 wt.%, based on the total weight of the masterbatch.

The amount of peroxide visbreaking agent may be adjusted to achieve a target MFR of the polypropylene material being present in the polymer compound. The target MFR of the polypropylene material may be an MFR of the polypropylene material as described above.

In one embodiment (of process route A), the polymer compound is obtainable by melt blending a polypropylene starting material being a linear propylene homopolymer, a peroxide visbreaking agent (typically being part of a masterbatch), and the polyunsaturated fatty acid ester being provided as part of a vegetable oil (e.g., linseed oil).

In an alternative embodiment (also referred herein to as "process route B"), the polymer compound is obtainable, and particularly is obtained, by melt blending a polypropylene starting material B and the polyunsaturated fatty acid ester. The polyunsaturated fatty acid ester may be as defined herein above, e.g., in connection with process route A.

The polypropylene starting material B may have a melt flow rate $MFR_2$ in a range of 1.5 to 6.0 g/10 min, and preferably in a range of 2.0 to 6.0 g/10 min, like in a range of 3.0 to 6.0 g/10 min, determined according to ISO 1133 at 230 °C and a load of 2.16 kg. As such, the polypropylene starting material B may have an MFR which is the same or slightly below the polypropylene material being present in the polymer compound (of which the MFR may be seen as a target MFR). In view thereof, process route B typically does not contain a visbreaking step. In other words, a peroxide visbreaking agent may be absent during preparation of the polymer compound by melt blending via process route B. Preferably, the polypropylene starting material B is a propylene homopolymer, and more preferably a linear propylene homopolymer.

The polypropylene starting materials A and B may be a propylene homopolymer, a heterophasic propylene copolymer (HECO), or a copolymer of propylene. The polypropylene starting materials A and B may also be a blend of two or more polypropylene starting materials selected from the group consisting of propylene homopolymers, a heterophasic propylene copolymers (HECOs), and copolymers of propylene. As set out above, it is preferred that the polypropylene starting materials A and B are propylene homopolymers, and particularly linear propylene homopolymers.

The polypropylene starting materials A and B as described herein may be isotactic. Accordingly, the polypropylene starting materials A and B may have a rather high pentad concentration (mmmm%) i.e. more than 94.1 %, like more than 94.4 %, like in a range of 94.7 to 97.7 %.

The polypropylene starting materials A and B as described herein are known in the art and commercially available. Furthermore, the preparation of suitable polypropylene starting materials as described herein, like linear propylene homopolymers, is, for example, described in Moore, E. P. (996) Polypropylene Handbook. Polymerization, Characterization, Properties, Processing, Applications, Hanser Publishers; New York.

In particular, the polypropylene starting materials A and B may be prepared in the presence of:

(a) a Ziegler-Natta catalyst comprising compounds of a transition metal of Group 4 to 6 according to IUPAC, a Group 2 metal compound and an internal donor;
(b) optionally a co-catalyst, and
(c) optionally an external donor.

This Ziegler-Natta catalyst can be any stereospecific Ziegler-Natta catalyst for propylene polymerization, which may be capable of catalyzing the polymerization and copolymerization of propylene and optional comonomers at a pressure of 500 to 10000 kPa, in particular 2500 to 8000 kPa, and at a temperature of 40 to 110 °C, in particular of 60 to 110 °C.

The polymer compound may comprise (essentially consist of or consist of), based on the total weight of the polymer compound,

> 95.0 to 99.98 wt.%, like 96.5 to 99.98 wt.%, of the polypropylene material,
> 0.02 to 1.0 wt.%, like 0.02 to 0.5 wt.% (e.g., 0.02 to 0.3 wt.%), of the polyunsaturated fatty acid ester,
> optionally 0.01 to 4.0 wt.%, like 0.02 to 3.0 wt.%, of one or more additives.

The polymer compound may comprise (essentially consist of or consist of), based on the total weight of the polymer compound,

> 95.0 to 99.97 wt.%, like 96.5 to 99.96 wt.%, of the polypropylene material,
> 0.02 to 1.0 wt.%, like 0.02 to 0.5 wt.% (e.g., 0.02 to 0.3 wt.%), of the polyunsaturated fatty acid ester,
> 0.01 to 4.0 wt.%, like 0.02 to 3.0 wt.%, of one or more additives.

The weight amount of the components of the polymer compound may be selected to sum up to 99.8 wt.% or 100 wt.%.

The one or more additives may be, but are not limited to, nucleating agents and clarifiers, stabilizers, release agents, fillers, peroxides, plasticizers, anti-oxidants, lubricants, antistatics, Vitamin E, scratch resistance agents, high performance fillers, pigments and/or colorants, impact modifiers, flame retardants, blowing agents, acid scavengers, recycling additives, coupling agents, anti-microbials, anti-fogging additives, slip agents, anti-blocking additives, polymer processing aids and the like.

The one or more additives may comprise or may be a release agent, like a stearate-based release agent, e.g., calcium stearate. The release agent may be present in the polymer compound in combination with a polymer carrier resin originating from an additive masterbatch.

## 2. Irradiation of the polymer compound

The process comprises the step of irradiating the polymer compound by means of electron beam irradiation.

Irradiating the polymer compound by means of electron beam irradiation is believed to initiate a radical formation and a subsequent (long chain) branching of the polypropylene material being present in the polymer compound.

Irradiation of polymers by means of electron beam irradiation is known in the art. Typically, the amount of radiation applied to the respective sample matter is indicated by the unit Gray (Gy), which is the absorption of one joule of radiation energy per kilogram of matter. Since the absorbed energy at different depths of the matter varies, the radiation doses given in this disclosure refer to the amount of energy that is applied to the surface of the matter facing the electron beam per kilogram of the matter and are therefore described as "surface irradiation doses".

A total surface irradiation dose of the electron beam radiation may be in a range of 50 to 120 kGy, and preferably in a range of 60 to 100 kGy, like in a range of 80 to 95 kGy or in a range of 80 to 90 kGy. The total surface irradiation dose may be applied onto the polymer compound in one irradiation period or two or more irradiation periods.

In one preferred embodiment, the total surface irradiation dose is applied in two or more irradiation periods, like two irradiation periods. For example, an applied surface irradiation dose in a first of the two or more irradiation periods may be in the range of 10 to 100 kGy, preferably 30 to 90 kGy, and more preferably 40 to 80 kGy. An applied surface irradiation dose in a second of the two or more irradiation periods may be in the range of 5 to 70 kGy, preferably 10 to 50 kGy, and more preferably 15 to 45 kGy. It is preferred, that the applied surface irradiation dose in the second of the two or more irradiation periods is lower than the applied surface radiation dose in the first of the two or more irradiation periods. For example, the applied surface irradiation dose in the first of the two or more irradiation periods may be 60 kGy, and the applied surface radiation dose in the second of the two or more irradiation periods may be 30 kGy.

When the total surface irradiation is applied in two or more irradiation periods (e.g., two irradiation periods), there may be a period of no irradiation between the two or more irradiation periods of in the range of 0.01 min to 20 min, like 1.0 min to 15 min or 2.0 min to 10 min. Just for clarification, the inventive process does not comprise further irradiation periods before or after the step of irradiating the polymer compound by means of electron beam irradiation as described herein, and particularly in this section.

Methods to produce electron beams and apply irradiation doses are known in the art. Further it is well known, that the acceleration voltage and beam current of the used electron beam producing device have a direct influence on the penetration depth and transferable energy of the electron beam. It is preferred that the electron beam for the electron beam irradiation of the process is produced with an acceleration voltage of at least 5 MeV, and more preferably in the range of 5 to 15 MeV, like in the range of 7 to 13 MeV or in the range of 8 to 12 MeV.

In order to transfer the energy (corresponds to the surface radiation dose) of the electron beam onto the respective matter, the matter has to be subjected to the electron beam. This may be done in the process, for example, by using a moving belt that passes underneath the electron beam, thereby subjecting the polymer compound to the electron beam. The parameters that need to be adjusted in order to apply a specific radiation dose are known to the person skilled in the art. For example, a higher belt speed of the moving belt decreases the contact time of the electron beam with the matter to be irradiated and consequently lowers the applied surface radiation dose.

Other parameters that may influence the applied surface dose are the quality of the electron beam focus, the dimension of the electron beam and the distance of the matter to the horn of the electron beam generating device. Focused electron beams typically have a dimension of about 100x10 mm in close distance to the horn. The width of beam at the surface of the matter and resulting contact time depend on distance to horn and quality of e-beam focus.

The contact time t per irradiation period may be calculated by dividing the width of the electron beam at the surface (mm) by the belt speed (mm/s). The belt speed may depend on the required surface dose and on the energy (kWh) emitted from accelerator. Typical contact time for PP pellets placed on a moving belt irradiated with 200 kWh/ h operated at 190 kW output power may be < 2 seconds, assuming an electron beam with dimensions of 100x10 mm width.

The electron beam irradiation can be performed in an inert or in a non-inert environment. Preferably, the electron beam irradiation is carried out in an inert atmosphere (e.g., on a moving belt as described above). In particular, it is preferred that the irradiation is carried out under nitrogen. When the electron beam irradiation is performed in an inert environment, unwanted side reactions, such as uncontrolled peroxide formation by the oxygen in the air, may be avoided. The inert environment may be an atmosphere having oxygen content in an amount in the range of 1 to 1000 ppm, preferably 50 to 500 ppm, more preferably 100 to 300 ppm.

In order to control the gaseous environment, the polymer compound may be placed inside a sealable containment before carrying out the irradiating step. A suitable sealable containment may be any containment which prevents any substantial gas exchange between the inside of the containment and its outside. The form of the sealable containment is not limited to any specific form. The sealable containment may be, but is not limited to, a container, a reactor, or an airtight room.

During the electron beam irradiation and subsequent radical reaction, hydrogen gas may be produced. The sealable containment may be configured to collect hydrogen for further use as energy production and/or to create a reaction environment that supports the formation of long chain branches by increased partial pressure of hydrogen during irradiation process and following steps until all radicals are deactivated.

The process step of irradiating the polymer compound by means of electron beam irradiation provides an irradiated polymer compound. The irradiated polymer compound comprises, and may essentially be composed of or may be composed of, the high melt strength polypropylene according to an embodiment of the invention.

### 3. Further process steps

The irradiated polymer compound may contain reactive intermediates, like reactive radicals. In order to complete a branching reaction and/or deactivate the majority of radicals, the process may comprise a step of subjecting the irradiated compound to a heat treatment. The irradiated polymer compound may be subjected to a heat treatment at a temperature in the range of 40 to 150°C, like in a range of 80 to 120°C, e.g., about 100°C. The heat treatment may be carried out, for example, for a period of time in a range of 5 min to 240 min, like in a range of 60 to 180 min, e.g., of about 120 min. The heat treatment provides a heat-treated, irradiated polymer compound. The heat treatment can be applied in one or more steps with same or different temperature and/or time.

The irradiated, and optionally heat-treated, polymer compound may be stored for a time period before further use, e.g., for a time period in a range of 1 to 48 h, like 12 to 36 h or 15 to 25 h. The storage temperature may be, but is not limited to, a temperature between 10 to 40°C, like an ambient temperature.

The irradiated, and optionally heat-treated, polymer compound may be melt blended with one or more additives. The melt blending may be carried out by conventional melt extrusion.

The one or more additives may be, but are not limited to, nucleating agents and clarifiers, stabilizers, release agents, fillers, peroxides, plasticizers, anti-oxidants, lubricants, antistatics, Vitamin E, scratch resistance agents, high performance fillers, pigments and/or colorants, impact modifiers, flame retardants, blowing agents, acid scavengers, recycling additives, coupling agents, anti-microbials, anti-fogging additives, slip agents, anti-blocking additives, polymer processing aids and the like.

Preferably, the irradiated, and optionally heat-treated, polymer compound is at least melt blended with one or more antioxidants (e.g., selected from phosphite ester-based antioxidants and phenol-based antioxidants). The one or more antioxidants may be added in an amount of 0.02 to 1.5 wt.%, based on a combined weight of the one or more antioxidants and of the irradiated polymer compound. The one or more antioxidants may be added in form of an additive masterbatch.

In one specific embodiment, the process further comprises the steps of:

- heat treating the irradiated polymer compound, and
- melt blending the heat-treated, irradiated polymer compound with one or more additives (e.g., one or more antioxidants).

In one specific embodiment, the process comprises the steps of:

- providing a polymer compound comprising a polypropylene material and a polyunsaturated fatty acid ester,

  wherein the polypropylene material has a melt flow rate $MFR_2$ of 2.0 to 6.5 g/10 min, and preferably in a range of 2.5 to 6.0 g/10 min, determined according to ISO 1133 at 230 °C and a load of 2.16 kg,
  wherein the polymer compound is obtained by melt blending a polypropylene starting material, a peroxide visbreaking agent, and the polyunsaturated fatty acid ester (e.g., being provided as part of a vegetable oil);

- irradiating the polymer compound by means of electron beam irradiation;
- optionally heat treating the irradiated polymer compound; and
- melt blending the irradiated, and optionally heat-treated, polymer compound with one or more additives (e.g., one or more antioxidants).

**V. Example section**

**1. Methods**

The following definitions of terms and measuring methods apply for the above general description of the present disclosure as well as to the below examples unless otherwise defined.

1.1 Melt flow rate

The melt flow rate $MFR_2$ was measured according to ISO 1133 (230 °C, 2.16 kg load).

1.2 Gel index and gel number

**[0132]** The optical gel index and the gel number was measured with an optical control system (OCS) gel counting apparatus consisting of a measuring extruder, attached to this were a chill roll unit, a heating and cooling unit (Haake C40P with a temperature range of 15-90 °C), a line camera (FS-5/4096 pixel for dynamic digital processing of grey tone images) and a winding unit (with automatic drawing control up to 10 N).

Processing conditions for the OCS test:

Extruder rpm: 30
Temperature setting of barrels: 200-220-230-240-240 °C
Melt temperature: 230°C
Melt pressure : 17 bar
Chill role temperature: 80°C
Film width: 80 mm
Film speed : 4.2 m/min
Inspected film area: 5 $m^2$

The film (cast film) was prepared from the polypropylene material to be tested (e.g., the high melt strength polypropylene according to an embodiment of the invention). The film had a thickness of 50 $\mu$m. For each material, the average number of gel dots on a film surface of 5 $m^2$ was detected by the line camera. The line camera was set to differentiate the gel dot size according to the following table:

| Gel dot size | Calculating Factor |
|---|---|
| up to 300 $\mu$m | x 0.1 |
| up to 600 $\mu$m | x 1.0 |

(continued)

| Gel dot size | Calculating Factor |
|---|---|
| up to 1000 $\mu$m | x 5.0 |
| > 1000 $\mu$m | x 10.0 |

The number of gel dots detected per $m^2$ is called the gel number. The number of gel dots detected for each size per 5 $m^2$ was multiplied with its respective calculating factor. The sum of all those values gave one final value, which is called the gel index.

1.3 Shear thinning index (SHI)

The characterization of polymer melts by dynamic shear measurements complies with ISO standards 6721-1 and 6721-10. The measurements were performed on a stress controlled rotational rheometer (Anton Paar MCR501), equipped with a 25 mm parallel plate geometry. Measurements were undertaken on compression moulded plates using nitrogen atmosphere and setting a strain within the linear viscoelastic regime. The oscillatory shear tests were done at 200 °C applying a frequency range between 0.01 and 300 rad/s and setting a gap of 0.5 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G^* = G' + iG'' \ [Pa] \qquad (5)$$

$$\eta^* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [Pa \cdot s] \qquad (8)$$

The determination of the shear thinning index, which correlates with MWD and is independent of Mw, is done as described in equation 9.

$$SHI_{(0.05/285)} = \frac{Eta^* \text{ at } 0,05 \text{ rad/s}}{Eta^* \text{ at } 285 \text{ rad/s}} \qquad (9)$$

For example, the $SHI_{(0.05/285)}$ is defined by the value of the complex viscosity, in Pa s, determined at a frequency of 0,05 rad/s, divided by the value of the complex viscosity, in Pa s, determined at a frequency of 285 rad/s.

The values of storage modulus (G'), loss modulus (G"), complex modulus (G*) and complex viscosity ($\eta^*$) were obtained as a function of frequency ($\omega$). Thereby, e.g. $\eta^*_{285rad/s}$ (eta*$_{285rad/s}$) is used as abbreviation for the complex viscosity at the frequency of 285 rad/s and $\eta^*_{0.05rad/s}$ (eta*$_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{285}$ is used as abbreviation for the ratio of the loss modulus (G") and the storage modulus (G') at 285 rad/s. The elasticity balance $tan_{0.05}/tan_{285}$ is defined as the ratio of the loss tangent $tan_{0.05}$ and the loss tangent $tan_{285}$.

The polydispersity index, PI, is defined by equation 10.

$$PI = \frac{10^5}{G'(\omega_{COP})}, \qquad \omega_{COP} = \omega \text{ for } (G' = G'') \qquad (10)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References: [1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362. [2] "The influence of molecular structure on some rheological properties of polyethylene", Heino, E.L., Borealis Polymers Oy, Porvoo, Finland, Annual Transactions of the Nordic Rheology Society, 1995. [3] "Definition of terms relating to the non-ultimate mechanical properties of polymers", Pure & Appl. Chem., Vol. 70, No. 3, pp. 701-754, 1998.

1.4 $F_{30}$ melt strength, $v_{30}$ melt extensibility, additional melt strength (AMS)

The Rheotens measurement as described herein follows ISO 16790:2005. The strain hardening behaviour was determined by the method as described in the article "Rheotens-Mastercurves and Drawability of Polymer Melts", M. H. Wagner, Polymer Engineering and Science, Vol. 36, pages 925 to 935. The strain hardening behaviour of polymers was analysed by Rheotens apparatus (product of Göttfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with an extruder (lab extruder by HAAKE Polylab system) and a gear pump with cylindrical die (LID = 6.0/2.0 mm). For measuring $F_{30}$ melt strength and $v_{30}$ melt extensibility, the pressure at the extruder exit (= gear pump entry) is set to 30 bars by by-passing a part of the extruded polymer.

The gear pump was pre-adjusted to a strand extrusion rate of 5 mm/s, and the melt temperature was set to 200°C. The spinline length between die and Rheotens wheels was 100 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with a real-time data-acquisition program (PC program EXTENS). The real-time data-acquisition program displays and stores the measured data of tensile force and drawdown speed. The end points of the Rheotens curve (force versus pulley rotary speed), where the polymer strand ruptures, are taken as the $F_{30}$ melt strength and $v_{30}$ melt extensibility values, respectively.

The additional melt strength (AMS) is calculated according to equation (I)

$$AMS = MS(HMS\text{-}PP) - LMS \qquad (I),$$

wherein:

AMS is the additional $F_{30}$ melt strength (AMS) determined by Rheotens measurement according to ISO 16790:2005 in [cN], compared to the $F_{30}$ melt strength (LMS) of a linear polypropylene having the same melt flow rate $MFR_2$ (230 °C, 2.16 kg), determined according to ISO 1133, as the high melt strength polypropylene,

MS(HMS-PP) is the $F_{30}$ melt strength of the high melt strength polypropylene determined by Rheotens measurement according to ISO 16790:2005 in [cN],

LMS is the $F_{30}$ melt strength (LMS) in [cN] of a linear polypropylene having the same melt flow rate $MFR_2$ (230 °C, 2.16 kg), determined according to ISO 1133, as the high melt strength polypropylene, and

the $F_{30}$ melt strength (LMS) of the corresponding linear polypropylene having the same melt flow rate as the high melt strength polypropylene determined according to equation (II)

$$LMS = 17.35\,MFR^{-0.994} \qquad (II),$$

wherein MFR is the melt flow rate $MFR_2$ (230 °C, 2.16 kg) determined according to ISO 1133 of the high melt strength polypropylene.

Equation (II) is the fitting function of the melt flow rate $MFR_2$ (230 °C, 2.16 kg) determined according to ISO 1133 and the $F_{30}$ melt strength as defined above of commercial linear propylene homopolymers tested by the Rheotens. The melt flow rates and $F_{30}$ melt strength of said commercial linear propylene homopolymers from Borealis are summarized in the following table:

**Table:** $F_{30}$ melt strength as a function of the melt flow rate

| (Commercial) linear PP | $MFR_2$ [g/10min] | $F_{30}$ melt strength [cN] |
|---|---|---|
| **BA390** | 0.2 | 87 |
| **BE50** | 0.3 | 60 |
| **HA001** | 0.5 | 35 |
| **HA507** | 0.9 | 17 |
| **HB600TF** | 2.0 | 9 |
| **HC205TF** | 5.0 | 3.5 |
| **HD120MO** | 10.0 | 1.8 |

1.5 Gel permeation chromatography (GPC) measurement

**GPC measurement:**

A gel permeation chromatograph (GPC) manufactured by PolymerChar (Valencia, Spain) equipped with an infrared detector (IR5), an online four capillary bridge viscometer and a multi-angle light scattering (MALS) detector (Dawn Helios 2) with 18 angles ranging from around 22.5° to 147.0° from Wyatt technology (Santa Barabara, USA) was used. 3x Olexis and 1x Olexis Guard columns from Agilent as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. The polymer sample was dissolved at a concentration of 1 mg/ml at 160°C for 150min in TCB. 200 $\mu$l of the polymer solution were injected per analysis. The injected concentration of the polymer solution at 160°C ($c_{160°C}$) was determined in the following way.

**GPC-VISC-MALS:**

The IV detector was calibrated with NIST1475a using a nominal IV of 1.01 dl/g. The inter-detector volume between the different detectors, concentration (IR), LS and viscometer detector was achieved by analysing a narrow distributed PS standard having a molar mass of 30000 g/mol.

For the determination of MWD using GPC-VISC-MALS technique the normalisation of the different MALS angles was obtained with a narrow distributed PS standard having a molar mass of 30.000 g/mol. The MALS detector was calibrated with certified PE standard, NIST1475a with a Mw of 54.000 g/mol using a dn/dc of 0.094 ml/mg at a laser wavelength ($\lambda_0$) of 660 nm. For calculation of the molecular weight, the laser wavelength ($\lambda_0$) of 660 nm and a dn/dc of 0,094 ml/mg for the PP in TCB solution were used. Due to the higher baseline noise and frequent disturbances, the MALS signal of the smallest 3 angles were not used in all calculations. Because of the low sample concentration used, the second viral coefficient (A2=0) was neglected. The absolute Mw at each chromatographic slice and the corresponding radius of gyration ($R_g$) were obtained from the slope and the intercept of the Debye plot. Zimm formulism was used for extrapolation of the corresponding Rayleigh ratios ($R(\Theta)$) of the different angles.

Molecular weight averages (Mz(LS), Mw(LS) and Mn(LS)), Molecular weight distribution (MWD) and its broadness, described by polydispersity, PD(LS)= Mw(LS)/Mn(LS) (wherein Mn(LS) is the number average molecular weight and Mw(LS) is the weight average molecular weight obtained from GPC-LS) were calculated by Gel Permeation Chromatography (GPC) using the following formulas:

$$M_n(LS) = \frac{\sum_{i=1}^{N} A_i}{\sum\left(A_i / M_{i(LS)}\right)}$$

$$M_w(LS) = \frac{\sum_{i=1}^{N} (A_i \times M_{i(LS)})}{\sum A_i}$$

$$M_z(LS) = \frac{\sum_{i=1}^{N} (A_i \times M_{i(LS)}^2)}{\sum (A_i / M_i(LS))}$$

For a constant elution volume interval $\Delta V_i$, where $A_i$ and $M_{i(LS)}$ are the chromatographic peak slice area and polyolefin molecular weight (MW) determined by GPC-MALS respectively associated with the elution volume, $V_i$.

The corresponded bulk IV(bulk) and bulk $M_w$ (bulk) values are calculated in the following way:

$$M_w(bulk) = \frac{Area_{LS_{zero}}}{Area_{IR}} * \frac{K(Mals)}{(dn/dc)^2}$$

$$IV(bulk) = \frac{Area_{SpVisc}}{Area_{IR} * KIV}$$

Where $Area_{IR}$, $Area_{LSzero}$ and $Area_{SpVisc}$ are the area of the concentration signal (IR5), the area of the extrapolated LS signal at 0° angle and the area of the specific viscosity. KIV and K(MALS) are the corresponded detector constants.

**GPC conventional:**

The column set was calibrated using universal calibration with 19 polystyrene (PS) standards with a narrow molecular weight distribution (MWD) in the range of 0.5 kg/mol to 11 500 kg/mol. The PS standards were dissolved for 30 min at 160°C. The conversion of the polystyrene peak molecular weight to polypropylene molecular weights is accomplished by using the Mark Houwink equation and the following Mark Houwink constants:

$$K_{PS} = 19 \times 10^{-3} \text{ mL/g,} \qquad \alpha_{PS} = 0.655$$

$$K_{PP} = 19 \times 10^{-3} \text{ mL/g}, \qquad \alpha_{PP} = 0.725$$

A third order polynomial fit was used to fit the calibration data.

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) using the following formulas:

$$M_n = \frac{\sum_{i=1}^{N} A_i}{\sum_{i=1}^{N} (A_i/M_i)}$$

$$M_w = \frac{\sum_{i=1}^{N} (A_i \times M_i)}{\sum_{i=1}^{N} A_i}$$

$$M_z = \frac{\sum_{i=1}^{N} (A_i \times M_i^2)}{\sum_{i=1}^{N} (A_i/M_i)}$$

$$IV_{conv} = K_{pp} \frac{\sum_{i=1}^{N} (A_i \times M_i^{\alpha_{PP}})}{\sum_{i=1}^{N} A_i}$$

$$PI = Mw/Mz$$

For a constant elution volume interval $\Delta V_i$, where $A_i$, and $M_i$ are the chromatographic peak slice area and polyolefin molecular weight (MW), respectively associated with the elution volume, $V_i$.

**gpcBR index:**

The gpcBR index is calculated by using the following formula:

$$gpc_{BR} = \left[ \left( \frac{IV_{conv}}{IV(bulk)} \right) \right] \cdot \left[ \frac{M_w(bulk)}{M_w} \right]^{\alpha} - 1$$

All GPC calculation were performed using GPCone Software from PolymerChar. Reference: Wyatt, P.J. (1993) Analy. Chim. Acta, Light Scattering and the Absolute Characterisation of Macromolecules. 272, 1-40.

1.6 Determination by $^1$H-NMR of grafted coupling agent concentration ($\alpha$-linolenic acid) after irradiation

**Soxhlett extraction to remove non grafted coupling agent:**

2.5 g of the ground sample are weighed into a soxhlett sleeve. In a round flask (250 ml) 200 ml n-hexane are placed, the sleeve is inserted into the soxhlet. Extraction of non grafted coupling agent takes place under reflux cooling over a period of 24 hours. The residue is dried overnight in the vacuum drying oven at 90 °C, cooled to room temperature and used for *$^1$H NMR spectroscopy method.*

**$^1$H NMR spectroscopy method:**

Quantitative $^1$H NMR spectra recorded in the solution-state using a Bruker AVNEO 400 NMR spectrometer operating at 400.15 MHz. All spectra were recorded using a $^{13}$C optimised 10 mm selective excitation probe head at 125°C using nitrogen gas for all pneumatics.

Approximately 200 mg of material was dissolved in approximately 3 ml *1,2*-tetrachloroethane-dz (TCE-$d_2$) using approximately 3 mg of Hostanox 03 (CAS 32509-66-3) as stabiliser. Standard single-pulse excitation was employed utilising a 30 degree pulse, a relaxation delay of 3 s and 10 Hz sample rotation. A total of 64k data points were collected per FID with a dwell time of 61 $\mu$s, corresponding to a spectral window of approximately 20 ppm. 512 transients were acquired per spectra using 4 dummy scans. This setup was chosen for high sensitivity, resolution and stability with respect to unsaturated species.

Quantitative $^1$H spectra were processed applying an exponential window function with 0.3 Hz line-broadening, integrated and relevant ratios determined from the intensities of the integrals. All chemical shifts were indirectly referenced to TMS at 0.00 ppm using the signal resulting from the residual protonated solvent at 5.95 ppm {*Resconi L., Cavallo L., Fait A.,*

Piemontesi F., Chem. Rev. 2000, 100, 1253} and the intensity of the aliphatic bulk signal ($I_{bulk}$) set to 100000. Characteristic signals at specific $^1$H NMR chemical shifts corresponding to the presence of the listed structural groups were observed which are summarized in the following table {Resconi L., Piemontesi F., Camurati I., Sudmeijer O., Nifantèf I. E., Ivschenko P. V., Kuzmina L. G., J. Am. Soc. 1998, 120, 2308-2321}:

**Table:** Characteristic $^1$H NMR signals

| Structural group | Chemical shift $^1$H NMR [ppm] | Intensity |
|---|---|---|
| aliphatic bulk | 2.80 - (-0.5) | y |
| terminal vinylidene | 4.73 - 4.66 | w |
| internal vinylidene | 4.85 - 4.73 | z |
| vinylene | 5.55 - 5.27 | x |
| allyl isobutenyl | 5.08 - 4.85 | v |
| hostanox | 7.00 - 6.81 | h |

Ratios between intensities of specific groups are calculated compensating for influences of other groups:

$$\text{ratio } x/z = x / (z-w)$$

$$\text{ratio } x/y = x / (y-(h/4*42))$$

1.7 Quantification of microstructure by NMR spectroscopy:

Quantitative nuclear-magnetic resonance (NMR) spectroscopy, e.g., for determining comonomer content, tacticity, region defects, and the like, is carried out as described in section "Measuring methods" in WO 2022/238520 A1, which is incorporated herein by reference.

1.8 Melting temperature (Tm) and crystallization temperature (Tc)

The melting temperature, Tm, is determined by differential scanning calorimetry (DSC) according to ISO 11357-3 (TA-Instruments 2920 Dual-Cell with RSC refrigeration apparatus and data station). A heating and cooling rate of 10 °C/min is applied in a heat/cool/heat cycle between +23 and +210 °C. The crystallization temperature (Tc) is determined from the cooling step while melting temperature (Tm) and melting enthalpy (Hm) are being determined in the second heating step.

1.9 High speed coating tests on Beloit line

Coating performance of the inventive high melt strength polypropylene was compared to commercial WE100HMS grade (Borealis AG) by high speed coating test on Kraft paper. The materials were tested on a pilot scale high speed extrusion coating line (Beloit line) where the maximum stable output has been determined. In order to assess the processing behavior of different polypropylenes, systematic trials on a 350 kg/hr high speed extrusion coating line with a maximum coating speed of 400 m/min have been carried out.

The extrusion coating line was a Beloit line built in 1973 by the manufacturer Beloit Corporation Downingtown Division (Downingtown P.A.). The extrusion line operated with two extruders (Extruders 1&2: operating parallel, i.e., both producing part of the total coating thickness or gsm) with a size of 4.5" and LID 24. It had a Peter Cloeren's die (T-slot die; internal and external deckling) and a five layer feed block.

In the coating line, a Kraft paper (Prime Brown; a brown unglazed flat Kraft paper from Billerud) having a basis weight of 70 g/m$^2$ was coated with a polymer having a coating weight of 10 g/m$^2$. The temperature of the polymer melt was set to 290° C and the extruders temperature profile was 200-240-290-290° C. The chill roll was matt and temperature of its surface was 15°C. The used die opening was 0.65 mm and nip distance was 160 mm. Melt film touched the substrate for the first time 10 mm from nip to substrate side. Pressure of the pressure roll was 3.0 kp/cm. Ozone treatment for the melt (Sherman) and Corona treatment for the substrate (Vetaphone) were employed for all samples. The extruder barrel temperatures were set to 290°C, the screw speed was adjusted to yield the respective coating weight, and the die width was 0.914 m. The maximum line speed at which stable process conditions were obtained, was assessed by increasing the line speed in steps of 100 m/min and keeping the coating weight constant at 10 g/m$^2$. As soon as either the edge-weaving exceeded a limiting value of 3 mm or the melt curtain became unstable, the experiment was stopped. The highest line speed, which could be achieved according to this procedure, was taken as maximum draw down (DD). An illustrative test result based on the commercial grade WE100HMS is shown in the table below for reference.

**Table:** Coating test runs for determining maximum draw down using WE100HMS on VG Kraft paper

| Run # | 1 | 2 | 3 |
|---|---|---|---|
| Speed [m/min] / Coating weight [g/m2] | 100/10 | 200/10 | 200/10 |
| Line speed (m/min) | 100 | 200 | 200 |
| Draw down speed (m/min) | | 260 | 270 |
| Neck-in [mm] (die width 914 mm) | 109 | 104 | 104 |
| Edge weaving [mm] | 0 to 1 | 1 to 2 | 1 to 2 |
| Stability | yes | yes | Yes |
| Break | no | no | yes |
| Extruder 1 melt T (°C) | 287 | 287 | 287 |
| Extruder 1 speed (rpm) | 17 | 34 | 34 |
| Extruder 1 back pressure | 44 | 63 | 63 |
| Current (A) | 72 | 106 | 106 |
| Extruder 2 melt T (°C) | 288 | 288 | 288 |
| Extruder 2 speed (rpm) | 19 | 35 | 35 |
| Extruder 2 back pressure | 46 | 56 | 56 |
| Current (A) | 77 | 109 | 109 |

## 2. Examples

Inventive examples IE1 to IE3 prepared as follows:

2.1 Starting materials for preparing polymer compounds PC1 to PC3

The following materials were used for preparing polymer compounds PC1 to PC3:

**Polypropylene starting material:**

As a polypropylene starting material, the linear polypropylene homopolymer HA001 of Borealis was used. It has a MFR$_2$ of 0.6 g/10 min (230 °C, 2.16 kg/cm$^2$; ISO 1133), a melting point of 161 °C, a crystallization temperature of 116 °C, an isotacticity of 97.3 % (pentad concentration by $^{13}$C NMR) produced by slurry process using a Ziegler-Natta catalyst. It contains 50 ppm by weight of Irganox 1076 (antioxidant by BASF). The $F_{30}$ melt strength of the stabilized polypropylene powder is 35 cN.

**Source of the at least one polyunsaturated acid or ester thereof:**

As a source of the at least one polyunsaturated acid or ester thereof, linseed oil was used. The linseed oil was purchased from Lausitzer Ölmühle Hoyerswerda GmbH and was a cold-pressed linseed oil comprising approx.: 99 g fats, 23 g monounsaturated fatty acids, 60 g polyunsaturated fatty acids, 15 g saturated fatty acids and 0.22 g protein per 100 mL.

**Peroxide visbreaking agent:**

As a peroxide visbreaking agent, the commercially available peroxide visbreaking agent masterbatch DHBP-1-IC5 from United initiators was used. This is a 1 wt.% masterbatch of 2,5-dimethyl-2,5-di(tert.butylperoxy)hexane in a polypropylene carrier material. It is added in an amount of about 1 to 2 wt.% to adjust the MFR to a predefined target value (cf. MFRs of compounds PC1 to PC3 indicated below).

2.2 Preparation of polymer compounds PC1 to PC3

The propylene homopolymer HA001 (powder form) of Borealis was compounded with about 1 wt.% of the peroxide visbreaking masterbatch agent, 0.1 wt.% of linseed oil and 0.05 wt.% calcium stearate into polypropylene pellets on a Prism TSE 24MC twin-screw extruder under nitrogen ($O_2$: 500 ppm) with a throughput of 10 kg/h using a soft screw at a speed of 200 rpm. The additives were dosed via a pre-blend or direct dosing to the extruder. The temperature setting of the extruder was 220°.

Screw configuration (TSE 24 MC; D = 24 mm; LID = 40) had the following sections/zones in the following order: zone (6 3/4 L/D) incl. exit die // 2nd conveyer zone (21 L/D) // soft mix zone (3 1/4 L/D ) // 1st conveyer zone (9 L/D) incl. main feed.

The screw elements of the soft mix zone were selected in such a way to introduce low shear to the polymer melt. The 3 % LID soft mix zone was arranged as follows: 2 LID of 1/4 LID kneading elements having 60° staggering angle and 1 1/4 LD of 1/4 LD kneading elements having 30° staggering angle.

Three different polymer compounds PC1 to PC3 were prepared having a $MFR_2$ (230 °C, 2.16 kg/cm$^2$; ISO 1133) as follows:

    Compound PC1 = 5.0 g/10 min
    Compound PC2 = 4.3 g/10 min
    Compound PC3 = 4.8 g/10 min

2.3 Electron beam irradiation of polymer compounds PC1 to PC3

Each one of polymer compounds PC1 to PC3 were subjected to electron beam irradiation as follows:
2 kg of the compound were placed in an aluminium cylinder having a wall thickness of 2 mm and an outer diameter of 100 mm equipped with a safety valve securing a maximum pressure of 0.2 bar. Before irradiation, the cylinder was flushed with nitrogen to reach 200 ppm oxygen in the gas phase in equilibrium using about 70 L $N_2$/ kg PP.

The aluminium cylinder containing the PP pellets and a nitrogen atmosphere with a defined $O_2$ concentration of 200-300 ppm is placed on a belt at 25 °C. The cylinder is then moved at a first belt speed $V_1$ passing a 10 MeV electron beam (TT200 from IBA with a beam current thereby applying a first surface radiation dose of 60 kGy to the sample. The belt is then stopped for a specific period of time (reaction time) and then moved backwards with a second belt speed $V_2$, thereby passing the electron beam again and applying a second surface radiation dose of 30 kGy to the sample. The specific parameter values for the irradiation of polymer compounds PC1 to PC3 are shown below in table 1.

Table 1:

| Example | Starting compound | Dose 1 | Beam current / belt speed | Reaction time | Dose 2 | Beam current / belt speed | Total surface dose |
|---------|-------------------|--------|---------------------------|---------------|--------|---------------------------|--------------------|
|         |                   | kGy    | mA/ mm/s                  | min           | kGy    | mA/ mm/s                  | kGy                |
| IE1     | PC1               | 60     | 19                        |               |        | 19                        |                    |

(continued)

| Example | Starting compound | Dose 1 | Beam current / belt speed | Reaction time | Dose 2 | Beam current / belt speed | Total surface dose |
|---|---|---|---|---|---|---|---|
| | | kGy | mA/ mm/s | min | kGy | mA/ mm/s | kGy |
| | | | 67 | 5 | 30 | 133 | 90 |
| IE2 | PC2 | 60 | 19 <br> 67 | 5 | 30 | 19 <br> 133 | 90 |
| IE3 | PC3 | 60 | 19 <br> 67 | 5 | 30 | 19 <br> 133 | 90 |

Afterwards the cylinder was stored for two hours at a temperature of 100°C to complete the reaction (deactivation of radicals). Afterwards, the irradiated polymer compound was stored for 20 h at room temperature.

For stabilization, each one of the irradiated polymer compounds was compounded with 0.05 wt.% of calcium stearate, 0.2 wt.% Irganox 1010 (antioxidant by BASF) and 0.2 wt.% Irgafos 168 (processing stabilizer by BASF) in a Prism TSE 24MC twin-screw extruder with a barrel length LID of 40 under nitrogen ($O_2$: 200-300 ppm at extruder inlet) with a throughput of 10 kg/h, screw speed of 300 rpm and a temperature of 220°C.

Screw configuration(TSE 24 MC; D = 24 mm; LID = 40) had the following sections/zones in the following order: 4th conveyer zone (6 3/4 L/D) incl. exit die // 3rd mixing zone (2 L/D) // 3rd conveyer zone (10 L/D) // 2nd mixing zone (2 L/D) // 2nd conveyer zone (7 L/D) // 1st soft mix zone (3 1/4 L/D) // 1st conveyer zone (9 L/D) incl. main feed.

The screw elements of the 3 mixing zones were selected in such a way to introduce good dispersion and mixing of polymer melt. More specifically, the mixing zones were arranged as follows:

- 3rd mixing zone:
  1/2 LID of 1/4 LID kneading elements having 90° staggering angle; 3/4 LID of 1/4 LID elements having 60° staggering angle; and 3/4 LD of 1/4 LID elements having 30° staggering angle;
- 2nd mixing zone:
  1/2 LID of 1/4 LID kneading elements having 90° staggering angle; 3/4 LID of 1/4 LID elements having 60° staggering angle; and 3/4 LD of 1/4 LID elements having 30° staggering angle;
- 1st soft mix zone:
  2 LID of 1/4 LID kneading elements having 60° staggering angle and 1 1/4 LD of 1/4 LD elements having 30° staggering angle.

Three different high melt strength polypropylenes according to inventive examples IE1 and IE3 were thus obtained starting from compounds PC1 to PC3. The high melt strength polypropylenes of examples IE1 to IE3 were tested using the OCS test as described herein for gel index and gel number. The high melt strength polypropylene of example IE2 was further tested in a high speed coating test. The properties of the high melt strength polypropylene of examples IE1 to IE2 is shown in table 2 below.

**Table 2:** Properties of high melt strength polypropylenes according to inventive examples IE1 to IE3 in comparison with comparative materials

| Example | Starting compound | MFR | SHI (eta 0.05/285) | F30 | V30 | AMS | DSC test | | OCS test | | High speed coating test | |
|---|---|---|---|---|---|---|---|---|---|---|---|---|
| | | | | | | | Tm (second heat) | Tc | Gel index | Gel number | Max. draw down velocity | Coating weight |
| | | [g/10 min] | | [cN] | [mm/s] | [cN] | [°C] | [°C] | | | [m/min] | [g/m²] |
| IE1 | PC1 | 15.9 | n. m. | 12.4 | 287 | 11.3 | 157.8 | 123.8 | 61 | 290 | n. m. | n. m. |
| IE2 | PC2 | 9.2 | 33 | 12.4 | 262 | 10.5 | 157.8 | 121.0 | 4 | 33 | 330 | 10 |
| IE3 | PC3 | 20.7 | 18 | 8.7 | 282 | 7.8 | 159.8 | 120.0 | 39 | 90 | n. m. | n. m. |
| Material | | | | | | | | | | | | |
| CE1 | WE100HMS | 10 | 25 | 8 | 250 | 6.2 | 162-163 | 122-124 | 593 | 923 | 270 | 10 |
| CE2 | WF420HMS | 20 | 13.6 | 6 | 260 | 5.1 | 160-161 | 124-125 | 24* | 101* | 500 | 10 |
| CE3 | Ref.1 ("IE1") | 7.6 | n. m. | 6 | 239 | 4.7 | | | 663 | n. m. | n. m. | n. m. |
| CE4 | Ref.1 ("IE2") | 7.3 | n. m. | 6.7 | 239 | 4.7 | | | 332 | n. m. | n. m. | n. m. |
| CE5 | Ref.1 ("IE3") | 11.4 | n. m. | 5.7 | 252 | 8.3 | | | 1777 | n. m. | n. m. | n. m. |
| CE6 | Ref.1 ("IE3") | 9.5 | n. m. | 7 | 250 | 7.0 | | | 408 | n. m. | n. m. | n. m. |

WE100HMS: commercial high melt strength polypropylene "Daploy WE100HMS" by Borealis AG
WF420HMS: commercial high melt strength polypropylene "Daploy WF420HMS" by Borealis AG
n.m.: not measured
Ref. 1: US 9,410,034; number in parenthesis indicates example number used in this US patent
* tested on a film having a thickness of 70 μm

**Claims**

1. A high melt strength polypropylene comprising units derivable from

   - propylene, and
   - at least one polyunsaturated fatty acid or an ester thereof,

   wherein the high melt strength polypropylene has:

   - a melt flow rate $MFR_2$ of at least 7.0 g/10 min, determined according to ISO 1133 at 230 °C and a load of 2.16 kg, and
   - a melt strength $F_{30}$ in a range of 6.0 to 17.5 cN, determined by Rheotens measurement according to IS016790:2005.

2. The high melt strength polypropylene according to claim 1, having a gel number of less than $300/m^2$, determined by an optical control system (OCS) test on a film of the high melt strength polypropylene having a thickness of 50 $\mu$m.

3. The high melt strength polypropylene according to claim 1 or 2, having a shear thinning index ($SHI_{0.05/285}$) in a range of 12 to 40, wherein the shear thinning index ($SHI_{0.05/285}$) is defined as a ratio between the complex viscosity $\eta^*$ at a frequency of 0.05 rad/s and the complex viscosity $\eta^*$ at a frequency of 285 rad/s, determined by oscillatory shear testing at a temperature of 200°C.

4. The high melt strength polypropylene according to any one of claims 1 to 3, wherein the melt flow rate $MFR_2$ is in a range of 7.0 to 30.0 g/10 min, determined according to ISO 1133 at 230 °C and a load of 2.16 kg.

5. The high melt strength polypropylene according to any one of claims 1 to 4, having an additional $F_{30}$ melt strength (AMS) of at least 5.0 cN, determined by Rheotens measurement according to ISO 16790:2005, compared to the $F_{30}$ melt strength (LMS) of a linear polypropylene having the same melt flow rate $MFR_2$, determined at 230 °C and a load of 2.16 kg according to ISO 1133, as the high melt strength polypropylene, wherein the additional $F_{30}$ melt strength (AMS) is determined according to equation (I)

$$AMS = MS(HMS\text{-}PP) - LMS \qquad (I),$$

   wherein:

   AMS is the additional $F_{30}$ melt strength (AMS) determined by Rheotens measurement according to ISO 16790:2005 in [cN], compared to the $F_{30}$ melt strength (LMS) of a linear polypropylene having the same melt flow rate $MFR_2$ (230 °C, 2.16 kg), determined according to ISO 1133, as the high melt strength polypropylene, MS(HMS-PP) is the $F_{30}$ melt strength of the high melt strength polypropylene determined by Rheotens measurement according to ISO 16790:2005 in [cN], LMS is the $F_{30}$ melt strength (LMS) in [cN] of a linear polypropylene having the same melt flow rate $MFR_2$ (230 °C, 2.16 kg), determined according to ISO 1133, as the high melt strength polypropylene, and wherein the $F_{30}$ melt strength (LMS) is determined according to equation (II)

$$LMS = 17.35 * MFR^{-0.994} \qquad (II),$$

   wherein MFR is the melt flow rate $MFR_2$, determined at 230 °C at a load of 2.16 kg according to ISO 1133, of the high melt strength polypropylene.

6. The high melt strength polypropylene according to any one of claims 1 to 5, wherein the at least one polyunsaturated fatty acid is $\alpha$-linolenic acid and/or linoleic acid.

7. The high melt strength polypropylene according to any one of claims 1 to 6, which is obtainable by electron beam irradiating a polymer compound comprising a polypropylene material and a polyunsaturated fatty acid ester.

8. The high melt strength polypropylene according to claim 7, wherein the polypropylene material is a visbroken polypropylene material.

9. A polymer composition comprising a high melt strength polypropylene according to any one of claims 1 to 8 and one or more additional polymer.

10. A product comprising a high melt strength polypropylene according to any one of claims 1 to 8 or a polymer composition according claim 9.

11. The product according to claim 10, wherein the product is a film or a coating.

12. A process for preparing a high melt strength polypropylene according to any one of claims 1 to 8, the process comprising the steps of:

   - providing a polymer compound comprising a polypropylene material and a polyunsaturated fatty acid ester,
   - irradiating the polymer compound by means of electron beam irradiation.

13. The process according to claim 12, wherein the polymer compound has a melt flow rate $MFR_2$ in a range of 2.0 to 6.5 g/10 min, determined according to ISO 1133 at 230 °C and a load of 2.16 kg.

14. The process according to claim 12 or claim 13, wherein the polymer compound comprises, based on the total weight of the polymer compound,

   95.0 to 99.98 wt.% of the polypropylene material,
   0.02 to 1.0 wt.% of the polyunsaturated fatty acid ester, and
   optionally 0.01 to 4.0 wt.% of one or more additives.

15. The process according to any one of claims 12 to 14, wherein the polymer compound is obtained by melt blending a polypropylene starting material, a peroxide visbreaking agent, and the polyunsaturated fatty acid ester.

Europäisches
Patentamt

European
Patent Office

Office européen
des brevets

## EUROPEAN SEARCH REPORT

**Application Number**

EP 24 16 5185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/238520 A1 (BOREALIS AG [AT]) 17 November 2022 (2022-11-17) * page 38, line 30 - line 35 * * example 1 * * claims 1-12 * | 1-15 | INV. C08J3/28 C08L23/12 |
| A | EP 2 569 340 B1 (BOREALIS AG [AT]) 25 September 2019 (2019-09-25) * claims 1-12 * | 1-15 | |
| A | CN 110 804 135 A (SHAANXI COAL CHEMICAL IND TECH RES INST CO LTD) 18 February 2020 (2020-02-18) * example 3 * * claims 1-10 * | 1-15 | |
| A | JP H08 301946 A (SHOWA DENKO KK) 19 November 1996 (1996-11-19) * paragraph [0025] * * example 1 * * claims 1-3 * | 1-15 | TECHNICAL FIELDS SEARCHED (IPC) C08J C08L |

The present search report has been drawn up for all claims

| Place of search | Date of completion of the search | Examiner |
|---|---|---|
| Munich | 28 August 2024 | Neumeier, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 5185

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| WO 2022238520 A1 | 17-11-2022 | CA | 3219389 A1 | 17-11-2022 |
| | | CN | 117321104 A | 29-12-2023 |
| | | EP | 4337705 A1 | 20-03-2024 |
| | | JP | 2024516870 A | 17-04-2024 |
| | | KR | 20230172607 A | 22-12-2023 |
| | | TW | 202244074 A | 16-11-2022 |
| | | US | 2024228685 A1 | 11-07-2024 |
| | | WO | 2022238520 A1 | 17-11-2022 |
| EP 2569340 B1 | 25-09-2019 | BR | 112012028741 A2 | 19-12-2017 |
| | | CN | 102947357 A | 27-02-2013 |
| | | EA | 201291028 A1 | 30-05-2013 |
| | | EP | 2386584 A1 | 16-11-2011 |
| | | EP | 2569340 A1 | 20-03-2013 |
| | | ES | 2755142 T3 | 21-04-2020 |
| | | KR | 20130000427 A | 02-01-2013 |
| | | US | 2013123416 A1 | 16-05-2013 |
| | | WO | 2011141070 A1 | 17-11-2011 |
| CN 110804135 A | 18-02-2020 | NONE | | |
| JP H08301946 A | 19-11-1996 | JP | 3429901 B2 | 28-07-2003 |
| | | JP | H08301946 A | 19-11-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9410034 B2
- EP 2492293 A1
- US 8142902 B2
- US 9574116 B2
- US 9353296 B2
- US 6251995 B1
- WO 2022238520 A1
- US 9410034 B

**Non-patent literature cited in the description**

- Rheological characterization of polyethylene fractions. **HEINO, E.L** ; **LEHTINEN, A** ; **TANNER J** ; **SEPPÄLÄ, J.** ; **NESTE OY** ; **PORVOO, FINLAND**. Theor. Appl. Rheol., Proc. Int. Congr. Rheol. 1992, vol. 1, 360-362
- **HEINO, E.L.** ; **BOREALIS POLYMERS OY** ; **PORVOO, FINLAND**. The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754
- **M. H. WAGNER**. Rheotens-Mastercurves and Drawability of Polymer Melts. *Polymer Engineering and Science*, vol. 36, 925-935
- **WYATT, P.J.** *Analy. Chim. Acta, Light Scattering and the Absolute Characterisation of Macromolecules.*, 1993, vol. 272, 1-40
- *CHEMICAL ABSTRACTS*, 32509-66-3
- **PIEMONTESI F.** *Chem. Rev.*, 2000, vol. 100, 1253
- **RESCONI L.** ; **PIEMONTESI F.,** ; **CAMURATI I.,** ; **SUDMEIJER O.,** ; **NIFANTÈF I. E.** ; **IVSCHENKO P. V.** ; **KUZMINA L. G.** *J. Am. Soc.*, 1998, vol. 120, 2308-2321